# EUROPEAN PATENT APPLICATION

(11) **EP 4 726 839 A1**
(43) Date of publication of application: **15.04.2026**
(21) Application number: 24830071.7
(22) Date of filing: 12.04.2024
(51) Int. Cl.: H01M 10/0568, H01M 10/0567, H01M 10/0525, H01M 10/058

(54) **ELECTROLYTIC SOLUTION, BATTERY CELL AND PREPARATION METHOD THEREFOR, BATTERY, AND ELECTRICAL DEVICE**

(30) Priority: 27.06.2023 CN 202310771021
(71) Applicant: Contemporary Amperex Technology Co., Limited, Ningde, Fujian 352100 (CN)
(72) Inventor: WU, Zeli, Ningde, Fujian 352100 (CN); HAN, Changlong, Ningde, Fujian 352100 (CN)
(74) Representative: Lorenz Seidler Gossel Part. mbB
(86) International application number: PCT/CN2024/087438
(87) International publication number: WO 2025/001421

(57) **Abstract**

An electrolytic solution, a battery cell, a preparation method therefor, a battery, and an electrical device. The electrolytic solution includes an electrolyte salt and an additive, the electrolyte salt includes a first electrolyte salt shown in formula (1), the additive includes a first additive shown in formula (2), the content by weight of the first electrolyte salt in the electrolytic solution is denoted as x, the content by weight of the first additive in the electrolytic solution is denoted as y, both of which are calculated based on the total weight of the electrolytic solution, and 50≤x/y≤500. The electrolytic solution can improve the cycle performance and dynamic performance of the battery.

## Description

### CROSS-REFERENCE TO RELATED APPLICATIONS

The present application claims priority to Chinese Patent Application No. 202310771021.2, filed on June 27, 2023 and entitled "Electrolytic Solution, Battery Cell, Preparation Method therefor, Battery, and Electrical Device", which is incorporated herein by reference in its entirety.

### TECHNICAL FIELD

The present application relates to an electrolytic solution, a battery cell, a preparation method therefor, a battery, and an electrical device.

### BACKGROUND

Recently, a battery is widely applied in an energy storage power system, such as a hydraulic, thermal, wind, or solar power plant, etc., and the fields of a power tool, an electric bicycle, an electric motorcycle, an electric vehicle, military equipment, aerospace, or the like. The electrolytic solution is an important component part of the battery, and the composition of the electrolytic solution affects the performance of the battery. The above statement merely provides the background information related to the present application and do not necessarily constitute the prior art.

### SUMMARY

The present application provides an electrolytic solution, a battery cell, a preparation method therefor, a battery, and an electrical device. The electrolytic solution can improve the cycle performance and dynamic performance of the battery.

A first aspect of the present application provides an electrolytic solution. The electrolytic solution comprises an electrolyte salt and an additive.

The electrolyte salt comprises a first electrolyte salt shown in formula (1), R₁ and R₂ each independently comprise a fluorine atom and C1-C6 fluoroalkyl, and M₁ comprises one or more of Li, Na, or K: 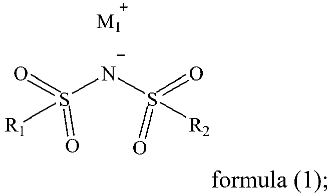
the additive comprises a first additive shown in formula (2), and R₃ and R₄ each independently comprise a fluorine atom and C1-C6 fluoroalkyl: 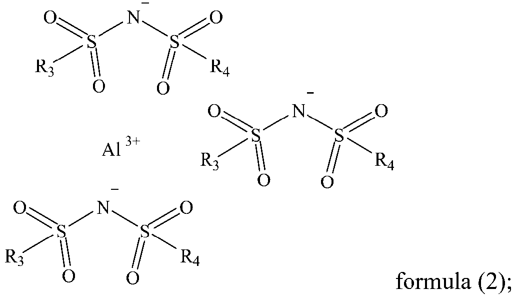 and
the content by weight of the first electrolyte salt in the electrolytic solution is denoted as x, the content by weight of the first additive in the electrolytic solution is denoted as y, both of which are calculated based on the total weight of the electrolytic solution, and 50≤x/y≤500.

The inventor finds, through research, that the electrolytic solution comprises the first additive shown in formula (2), and when the content by weight x of the first electrolyte salt in the electrolytic solution and the content by weight y of the first additive in the electrolytic solution are adjusted to satisfy 50≤x/y≤500, dissolution of a soluble product formed after a corrosion reaction between the first electrolyte salt and a positive electrode current collector into the electrolytic solution can be reduced. Therefore, this can reduce corrosion of the positive electrode current collector and improve the cycle performance of a battery, especially the cycle performance in a high-temperature environment, and further reduce the internal resistance of the battery and improve the dynamic performance of the battery.

In any embodiment, 100≤x/y≤400, and optionally 125≤x/y≤300.

In any embodiment, 1%≤x≤15%, and optionally 7%≤x≤12%.

In any embodiment, 0.01%≤y≤0.20%, and optionally 0.025%≤y≤0.10%.

In any embodiment, R₁ and R₂ each independently comprise a fluorine atom, trifluoromethyl, pentafluoroethyl, heptafluoropropyl, and nonafluorobutyl, and optionally, at least one of R₁ or R₂ represents a fluorine atom.

When R₁ and R₂ are within the foregoing ranges, this further helps form a relatively thin interfacial layer, thereby further helping reduce the interfacial ionic impedance, reduce the internal resistance of the battery, and improve the dynamic performance of the battery.

In any embodiment, R₃ and R₄ each independently comprise a fluorine atom, trifluoromethyl, pentafluoroethyl, heptafluoropropyl, and nonafluorobutyl, and optionally, at least one of R₃ or R₄ represents a fluorine atom.

When R₃ and R₄ are within the foregoing ranges, this further helps form a relatively thin interfacial layer, thereby further helping reduce the interfacial ionic impedance, reduce the internal resistance of the battery, and improve the dynamic performance of the battery.

In any embodiment, the first electrolyte salt comprises one or more of the following:

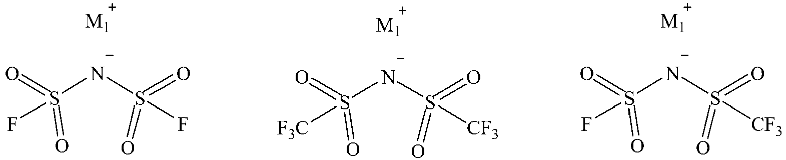

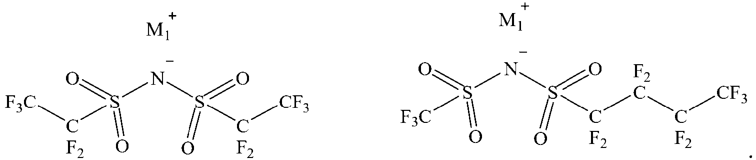

Optionally, the first electrolyte salt comprises one or more of A1 to A7:

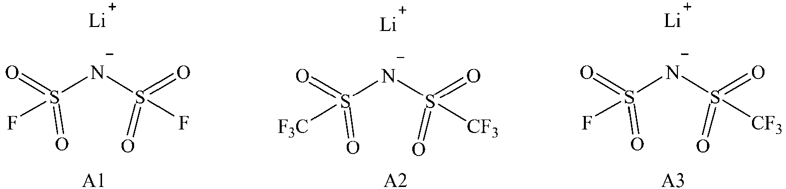

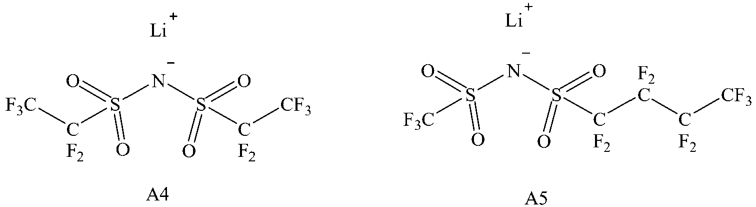

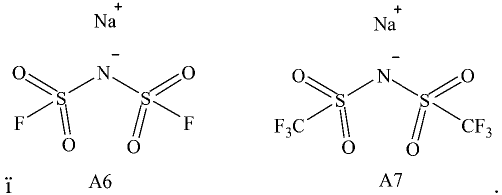

When the first electrolyte salt is within the foregoing range, the first electrolyte salt has higher thermal stability and is less prone to hydrolysis, and this further helps further improve the conductivity of the electrolytic solution, thereby helping further improve the cycle performance of the battery. In addition, when the first electrolyte salt is within the foregoing range, this further helps form a relatively thin interfacial layer and reduce the interfacial ionic impedance, thereby reducing the internal resistance of the battery and improving the dynamic performance of the battery.

In any embodiment, the first additive comprises one or more of B1 to B5:

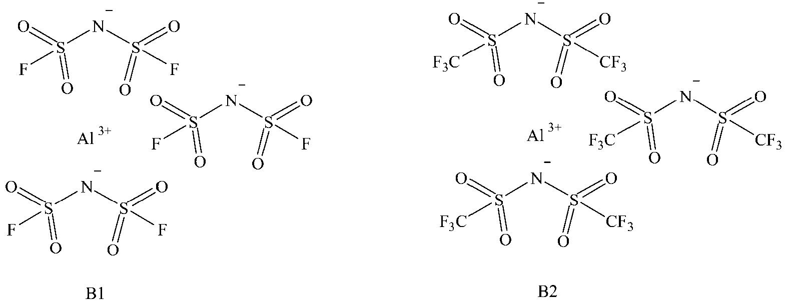

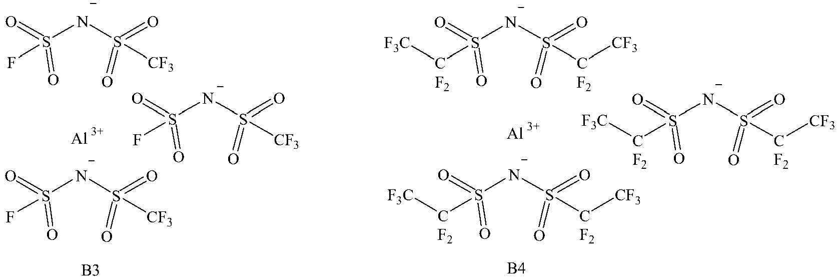

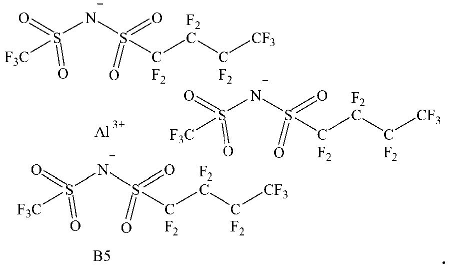

When the first additive is within the foregoing range, the first additive has higher thermal stability and is less prone to hydrolysis, and this further helps further improve the conductivity of the electrolytic solution, thereby helping further improve the cycle performance of the battery. In addition, when the first additive is within the foregoing range, this further helps form a relatively thin interfacial layer and reduce the interfacial ionic impedance, thereby further reducing the internal resistance of the battery and improving the dynamic performance of the battery.

In any embodiment, an anion of the first electrolyte salt shown in formula (1) is the same as an anion of the first additive shown in formula (2).

In any embodiment, the electrolytic solution further comprises a second electrolyte salt, and the second electrolyte salt comprises one or more of the following:

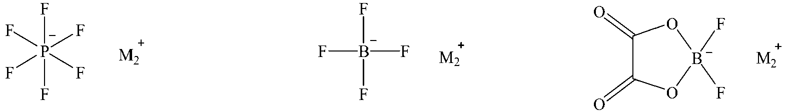

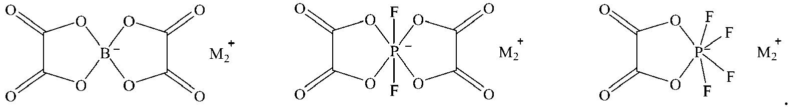

M₂ comprises one or more of Li, Na, or K, and optionally comprises one or more of Li or Na.

The second electrolyte salt can passivate the positive electrode current collector, for example, can form an insoluble product such as LiF, thereby protecting the positive electrode current collector and reducing corrosion of the positive electrode current collector by the first electrolyte salt. Therefore, when the electrolytic solution further comprises the second electrolyte salt, the cycle performance of the battery can be further improved.

In any embodiment, the content by weight of the second electrolyte salt in the electrolytic solution is denoted as m, which is calculated based on the total weight of the electrolytic solution, and m/(x+m) is greater than or equal to 15%. The content of the second electrolyte salt is adjusted, so that the electrolytic solution can further have both high conductivity and low viscosity, thereby further improving the cycle performance of the battery.

In any embodiment, the electrolytic solution further comprises a second additive shown in formula (3):

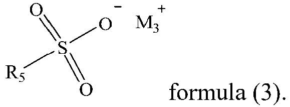

R₅ comprises a fluorine atom and C1-C6 fluoroalkyl, and M₃ comprises one or more of Li, Na, or K, and optionally comprises one or more of Li or Na.

The second additive shown in formula (3) has relatively high thermal stability, and also helps form a thinner and more flexible interfacial layer, thereby helping further improve the cycle performance and/or dynamic performance of the battery.

In any embodiment, the content by weight of the second additive in the electrolytic solution is denoted as n, which is calculated based on the total weight of the electrolytic solution, and 0.01%≤n≤1%.

In any embodiment, the second additive comprises one or more of the following:

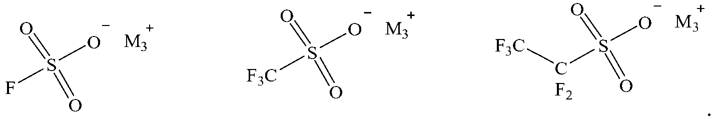

Optionally, the second additive comprises one or more of D1 to D6:

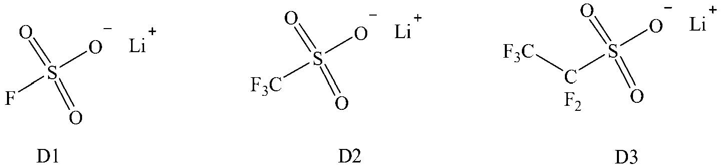

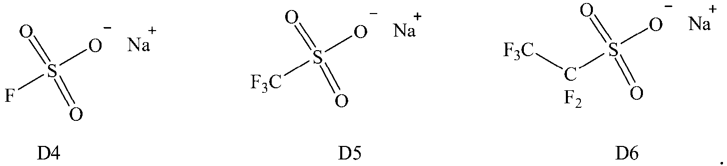

In any embodiment, the electrolytic solution further comprises a third additive shown in formula (4):

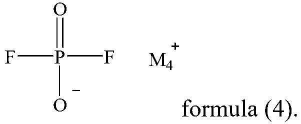

M₄ comprises one or more of Li, Na, or K, and optionally comprises one or more of Li or Na.

When the electrolytic solution further comprises the third additive, the storage performance, cycle performance, and/or dynamic performance of the battery can be further improved.

In any embodiment, the content by weight of the third additive in the electrolytic solution is denoted as p, which is calculated based on the total weight of the electrolytic solution, and 0.01%≤p≤1%.

In any embodiment, the electrolytic solution further comprises a non-aqueous solvent, and the non-aqueous solvent comprises one or more of cyclic carbonate, linear carbonate, or carboxylic ester.

In any embodiment, the content by weight of the cyclic carbonate in the non-aqueous solvent is denoted as a, which is calculated based on the total weight of the non-aqueous solvent, and 1%≤a≤35%.

In any embodiment, the content by weight of the linear carbonate in the non-aqueous solvent is denoted as b, which is calculated based on the total weight of the non-aqueous solvent, and 65%≤b≤99%.

In any embodiment, the content by weight of the carboxylic ester in the non-aqueous solvent is denoted as c, which is calculated based on the total weight of the non-aqueous solvent, and 0≤c≤30%.

A second aspect of the present application provides a battery cell, comprising a positive electrode sheet, a negative electrode sheet, and the electrolytic solution of the first aspect of the present application.

In any embodiment, the positive electrode sheet comprises a positive electrode current collector and a positive electrode film layer disposed on at least one surface of the positive electrode current collector, the positive electrode film layer comprises a first positive electrode active material, and a voltage plateau of the first positive electrode active material is greater than or equal to 3.6 V. The first positive electrode active material has a high voltage plateau, to help improve the energy density of a battery, but the thermal stability and cycle stability of the first positive electrode active material are usually relatively poor. Combined use of the first positive electrode active material of the high voltage plateau and the electrolytic solution provided in the present application can fully bring the advantage of the first positive electrode active material of the high voltage plateau, so that the battery has both high energy density and good cycle performance.

In any embodiment, the first positive electrode active material comprises one or more of lithium cobalt oxide, a lithium nickel cobalt manganese ternary material, a lithium nickel cobalt aluminum ternary material, and respective modified compounds thereof.

In any embodiment, the content by weight of the first positive electrode active material in the positive electrode film layer is greater than or equal to 50%, which is calculated based on the total weight of the positive electrode film layer.

In any embodiment, the positive electrode current collector comprises an aluminum foil, an aluminum alloy foil, an aluminum mesh, an aluminum alloy mesh, or a composite current collector with a surface containing aluminum or an aluminum alloy.

In any embodiment, the negative electrode sheet comprises one or more of natural graphite, synthetic graphite, soft carbon, hard carbon, a silicon-based material, a tin-based material, or lithium titanate.

A third aspect of the present application provides a preparation method for a battery cell, comprising the following steps: providing a cell container comprising a positive electrode sheet and a negative electrode sheet; and injecting the electrolytic solution according to the first aspect of the present application into the cell container, to obtain a battery cell.

A fourth aspect of the present application provides a battery, comprising the battery cell according to the first aspect of the present application or a battery cell prepared in the preparation method according to the second aspect of the present application.

A fifth aspect of the present application provides an electrical device, comprising the battery according to the fourth aspect of the present application.

The electrical device of the present application comprises the battery provided by the present application, and thus has at least the same advantages as the battery.

### DESCRIPTION OF DRAWINGS

In order to more clearly illustrate the technical solutions in the embodiments of the present application, drawings required to be used in the embodiments of the present application are briefly described below. It is clear that the drawings described below show only some embodiments of the present application, and those skilled in the art may further derive other drawings from the drawings without creative effort.
FIG. 1 is a schematic diagram of an embodiment of a battery cell according to the present application.
FIG. 2 is a schematic exploded view of the embodiment of the battery cell in FIG. 1.
FIG. 3 is a schematic diagram of an embodiment of a battery module according to the present application.
FIG. 4 is a schematic diagram of an embodiment of a battery pack according to the present application.
FIG. 5 is a schematic exploded view of the embodiment of the battery pack shown in FIG. 4.
FIG. 6 is a schematic diagram of an embodiment of an electrical device including a battery of the present application as a power supply.

The figures are not necessarily drawn to the actual scale. Reference signs: 1 - battery pack; 2 - upper box body; 3 - lower box body; 4 - battery module; 5 - battery cell; 51 - housing; 52 - electrode assembly; 53 - cover plate.

### DESCRIPTION OF EMBODIMENTS

Embodiments in which an electrolytic solution, a battery cell, a preparation method therefor, a battery, and an electrical device provided by the present application are specifically disclosed are described in detail appropriately with reference to the drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand the present application, and are not intended to limit the subject matter described in the claims.

The "range" disclosed in the present application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In the present application, unless otherwise stated, a numerical range "a-b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer ≥ 2, it is equivalent to disclosing that the parameter is an integer such as 2, 3, 4, 5, 6, 7, 8, 9, 10, 11, or 12.

Unless otherwise specified, all embodiments and optional embodiments of the present application may be combined with each other to form new technical solutions, and it is conceivable that such technical solutions should be included in the disclosure of the present application.

Unless otherwise specified, all technical solutions and optional technical solutions of the present application may be combined with each other to form new technical solutions, and it is conceivable that such technical solutions should be included in the disclosure of the present application.

Unless otherwise specified, all steps in the present application may be performed sequentially or randomly, preferably sequentially. For example, the method includes steps (a) and (b), meaning that the method may include steps (a) and (b) performed sequentially or steps (b) and (a) performed sequentially. For example, the mentioned method may further include step (c), meaning that step (c) may be added to the method in any order, e.g. the method may include steps (a), (b) and (c), or steps (a), (c) and (b), or steps (c), (a) and (b), etc.

In the present application, terms "first", "second", "third" etc. are used to distinguish different objects and are not intended to describe a particular order or primary/secondary relationship, unless otherwise specified.

In the present application, the terms "a plurality of" and "various" mean two or more.

Unless otherwise specified, the terms used in the present application have the meanings commonly understood by those skilled in the art.

Unless otherwise specified, the numerical values of each parameter mentioned in the present application can be measured by various test methods commonly used in the art, for example, they can be measured according to the test methods provided in the embodiments of the present application. A test temperature for each parameter is 25°C, unless otherwise specified.

In the present application, "fluoroalkyl" may be partially-fluorinated alkyl or fully-fluorinated alkyl. "fluoroalkyl" encompasses both linear-chain fluoroalkyl and branched-chain fluoroalkyl.

In various embodiments, C1-C6 fluoroalkyl means that fluoroalkyl can include 1-6 carbon atoms.

Throughout the description, substituents of compounds are disclosed in groups or ranges. It is expressly expected that the description of the groups or ranges includes each individual sub-combination of the members of the groups and ranges. For example, it is expressly expected that term "C1-C6 fluoroalkyl" independently discloses each of C1 fluoroalkyl, C2 fluoroalkyl, C3 fluoroalkyl, C4 fluoroalkyl, C5 fluoroalkyl, C6 fluoroalkyl, C1-C6 fluoroalkyl, C1-C5 fluoroalkyl, C1-C4 fluoroalkyl, C1-C3 fluoroalkyl, C1-C2 fluoroalkyl, C2-C6 fluoroalkyl, C2-C5 fluoroalkyl, C2-C4 fluoroalkyl, C2-C3 fluoroalkyl, C3-C6 fluoroalkyl, C3-C5 fluoroalkyl, C3-C4 fluoroalkyl, C4-C6 fluoroalkyl, C4-C5 fluoroalkyl, and C5-C6 fluoroalkyl.

A battery mentioned in the embodiments of the present application may be a single physical module including one or a plurality of battery cells to provide a higher voltage and capacity. For example, the battery mentioned in the present application may include a battery cell, a battery module, a battery pack, or the like.

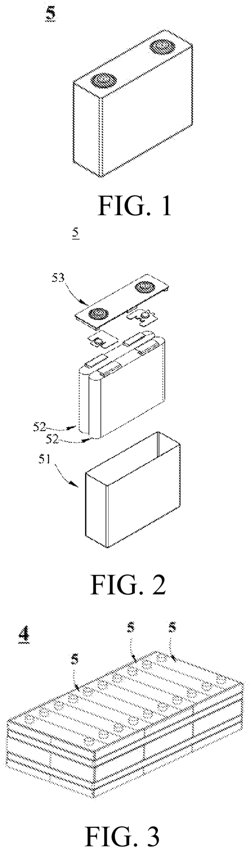

The battery cell is a minimum unit constituting a battery, which can implement charge and discharge functions alone. The battery cell may be in a shape of a cylinder, a flat body, a cuboid, or the like, which is not limited in the embodiments of the present application. FIG. 1 shows a battery cell 5 of a cuboid structure as an example.

When there are a plurality of battery cells, the plurality of battery cells are connected in series, in parallel, or in series-parallel via a busbar component. In some embodiments, the battery may be a battery module; and when there are a plurality of battery cells, the plurality of battery cells are arranged and fixed to form a battery module. In some embodiments, the battery may be a battery pack including a box and a battery cell, and the battery cell or the battery module is accommodated in the box. In some embodiments, the box may be a part of a chassis structure of a vehicle. For example, a part of the box body may be at least part of a chassis of a vehicle, or a part of the box body may be at least part of a transverse beam and a longitudinal beam of a vehicle.

In some embodiments, the battery may be an energy storage device. The energy storage device includes an energy storage container, an energy storage cabinet, and the like.

The battery cell generally includes an electrode assembly. The electrode assembly generally includes a positive electrode sheet and a negative electrode sheet, and may be a wound structure or a laminated structure, which is not limited in the embodiments of the present application.

The battery cell may further include an outer package that may be used to package an electrode assembly and an electrolyte. The outer package may be a hard shell, such as a hard plastic shell, an aluminum shell, or a steel shell. The outer package may also be a pouch, such as a bag-type pouch. The material of the pouch may be plastic, such as one or more of polypropylene (PP), polybutylene terephthalate (PBT), and polybutylene succinate (PBS).

In some embodiments, as shown in FIG. 2, the outer package may include a housing 51 and a cover plate 53. The housing 51 may include a bottom plate and side plates connected to the bottom plate, the bottom plate and the side plates forming an accommodating chamber in an enclosing manner. The housing 51 has an opening communicating with the accommodating chamber, and the cover plate 53 is configured to cover the opening to close the accommodating chamber. The electrode assembly 52 is packaged in the accommodating chamber. The battery cell 5 may have one or more electrode assemblies 52, and the number of the electrode assemblies may be adjusted as needed.

In some embodiments, the battery cells may be assembled into a battery module. The battery module may include a plurality of battery cells, and the specific number of the battery cells may be adjusted according to application and capacity of the battery module. FIG. 3 is a schematic diagram of a battery module 4 as an example. As shown in FIG. 3, in the battery module 4, a plurality of battery cells 5 may be arranged sequentially in a length direction of the battery module 4. Certainly, the secondary batteries may alternatively be arranged in any other manner. Further, the plurality of battery cells 5 may be fastened by using fasteners.

Optionally, the battery module 4 may further include a casing having an accommodating space in which the plurality of battery cells 5 are accommodated.

In some embodiments, the battery modules described above may be assembled into a battery pack, and the number of battery modules included in the battery pack may be adjusted according to the application and capacity of the battery pack.

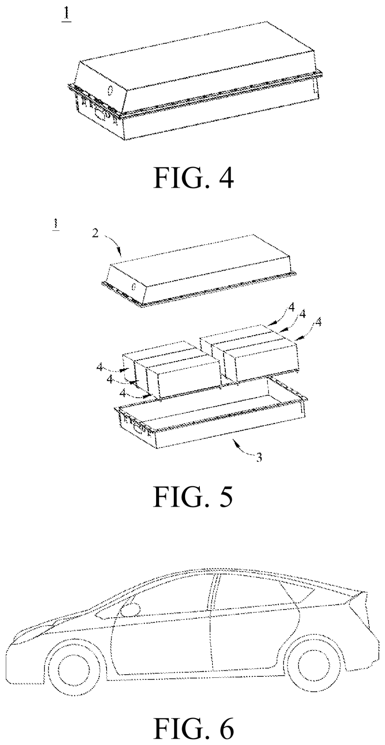

FIG. 4 and FIG. 5 are schematic diagrams of a battery pack 1 as an example. As shown in FIG. 4 and FIG. 5, the battery pack 1 may include a box body and a plurality of battery modules 4 disposed in the box body. The box body includes an upper box body 2 and a lower box body 3, where the upper box body 2 is configured to cover the lower box body 3 to form a closed space for accommodating the battery modules 4. The plurality of battery modules 4 may be arranged in the box body in any manner.

The electrolytic solution is one of the key factors affecting the performance of the battery. An electrolytic solution system that is currently most widely used commercially is a mixed carbonate solution of lithium hexafluorophosphate. However, lithium hexafluorophosphate has relatively poor thermal stability, and decomposes at a relatively high temperature to generate PF₅. PF₅ has relatively strong Lewis acidity, and interacts with a lone pair of electrons on an oxygen atom in a non-aqueous solvent molecule, to decompose a non-aqueous solvent. In addition, PF₅ has relatively high sensitivity to a trace of moistures in the electrolytic solution, and HF is generated when PF₅ comes into contact with water. Consequently, the performance of the battery deteriorates.

In view of this, the inventor further improves the electrolytic solution of a battery.

An electrolytic solution provided in an embodiment of the present application may be used in a battery cell.

The electrolytic solution provided in this embodiment of the present application includes an electrolyte salt and an additive.

The electrolyte salt includes a first electrolyte salt shown in formula (1), R₁ and R₂ each independently include a fluorine atom and C1-C6 fluoroalkyl, and M₁ includes one or more of Li, Na, or K:

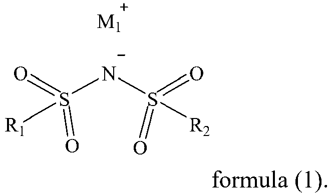

The additive includes a first additive shown in formula (2), and R₃ and R₄ each independently include a fluorine atom and C1-C6 fluoroalkyl:

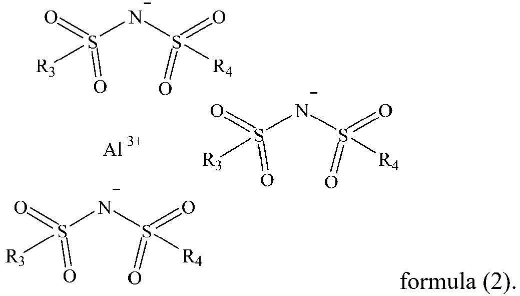

The content by weight of the first electrolyte salt in the electrolytic solution is denoted as x, the content by weight of the first additive in the electrolytic solution is denoted as y, both of which are calculated based on the total weight of the electrolytic solution, and 50≤x/y≤500.

The first electrolyte salt shown in formula (1) has high thermal stability and is not prone to hydrolysis. In addition, an anion of the first electrolyte salt shown in formula (1) is a weakly coordinated anion centered on N, a conjugated group and a fluorine atom and/or fluoroalkyl with a strong electron-withdrawing property are/is included, an anion charge is highly delocalized, and an acting force between the anion and M₁⁺ is relatively weak. Therefore, the first electrolyte salt further has relatively low lattice energy and is prone to dissociation, thereby further help improve the conductivity of the electrolytic solution and make a battery have good power performance. However, the first electrolyte salt is prone to corrode a positive electrode current collector, for example, an aluminum foil, at a high voltage (for example, a voltage over 4 V), and such a corrosive action becomes clearer at a high temperature.

The positive electrode current collector mainly functions to provide an electronic channel for an electrochemical reaction, accelerate a charge transfer, and reduce electrochemical polarization. Corrosion of the positive electrode current collector causes an irreversible capacity loss of the battery and further affects the use reliability of the battery. A soluble product formed through corrosion contaminates the electrolytic solution, and exacerbates decomposition of the electrolytic solution. As a corrosion reaction continuously occurs, soluble Al³⁺ in high concentration in the electrolytic solution is also migrated to a negative electrode and is reductively deposited. An aluminum metal formed by reducing Al³⁺ is deposited on a negative electrode active material, for example, a graphite surface, thereby blocking a diffusion channel of a lithium ion, and affecting deintercalation and intercalation of the lithium ion. In addition, in a use process of the battery, because the stability and compactness of a solid electrolyte interfacial layer on the surface of the negative electrode active material may be worse than those in an initial state of the battery, Al³⁺ continuously obtained through dissolution after the positive electrode current collector is corroded seriously affects the performance of the battery, for example, deteriorates the cycle performance and dynamic performance of the battery. In addition, the soluble product formed through corrosion further increases polarization of the battery, exacerbates lithium plating at the negative electrode, and reduces the use reliability of the battery.

The inventor finds, through research, that the electrolytic solution includes the first additive shown in formula (2), and when the content by weight x of the first electrolyte salt in the electrolytic solution and the content by weight y of the first additive in the electrolytic solution are adjusted to satisfy 50≤x/y≤500, dissolution of a soluble product formed after a corrosion reaction between the first electrolyte salt and the positive electrode current collector into the electrolytic solution can be reduced. Therefore, this can reduce corrosion of the positive electrode current collector and improve the cycle performance of the battery, especially the cycle performance in a high-temperature environment, and further reduce the internal resistance of the battery and improve the dynamic performance of the battery.

The inventor finds, through research, that when x/y is greater than 500, the content of the first electrolyte salt in the electrolytic solution is relatively high, and the content of the first additive is relatively low. In this case, the first additive is insufficient to reduce dissolution of the soluble product formed after the corrosion reaction between the first electrolyte salt and the positive electrode current collector into the electrolytic solution, and consequently, corrosion of the positive electrode current collector cannot be reduced, thereby resulting in a poor improvement to the cycle performance of the battery and an unclear reduction in the internal resistance of the battery. When x/y is less than 50, the content of the first electrolyte salt in the electrolytic solution is relatively low and the content of the first additive in the electrolytic solution is relatively high. In this case, the content of Al³⁺ in the electrolytic solution is also relatively high, and a large amount of Al³⁺ is migrated to the negative electrode and is reductively deposited. Due to a relatively high reduction potential of Al³⁺, the aluminum metal is preferentially reductively deposited on the negative electrode active material, for example, the graphite surface, thereby also affecting deintercalation and intercalation of the lithium ion, and affecting the cycle performance and dynamic performance of the battery.

In some embodiments, x/y can be 50, 75, 100, 125, 150, 200, 250, 300, 350, 400, or a range including any of the foregoing values. Optionally, 100≤x/y≤400, and more optionally, 125≤x/y≤300.

In some embodiments, 1%≤x≤15%, for example, may be 1%, 2%, 3%, 5%, 7%, 10%, 12%, 15%, or a range including any of the foregoing values. Optionally, 5%≤x≤12%, and 7%≤x≤12%.

In some embodiments, 0.01%≤y≤0.20%, for example, may be 0.01%, 0.02%, 0.025%, 0.03%, 0.04%, 0.05%, 0.08%, 0.10%, 0.12%, 0.15%, 0.20%, or a range including any of the foregoing values. Optionally, 0.02%≤y≤0.20%, 0.02%≤y≤0.15%, 0.02%≤y≤0.12%, 0.02%≤y≤0.10%, 0.02%≤y≤0.08%, 0.025%≤y≤0.15%, 0.025%≤y≤0.12%, 0.025%≤y≤0.10%, 0.025%≤y≤0.08%, 0.04%≤y≤0.15%, 0.04%≤y≤0.12%, 0.04%≤y≤0.10%, 0.04%≤y≤0.08%, 0.05%≤y≤0.15%, 0.05%≤y≤0.12%, 0.05%≤y≤0.10%, and 0.05%≤y≤0.08%.

In some embodiments, R₁ and R₂ each may independently include a fluorine atom, trifluoromethyl, pentafluoroethyl, heptafluoropropyl, and nonafluorobutyl. Optionally, at least one of R₁ or R₂ represents a fluorine atom.

When R₁ and R₂ are within the foregoing ranges, this further helps form a relatively thin interfacial layer, thereby further helping reduce the interfacial ionic impedance, reduce the internal resistance of the battery, and improve the dynamic performance of the battery.

In some embodiments, M₁ may include one or more of Li or Na, and optionally, M₁ may include Li.

In some embodiments, the first electrolyte salt may include one or more of the following:

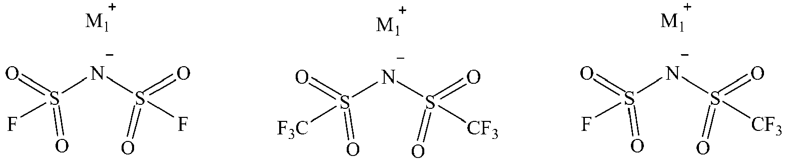

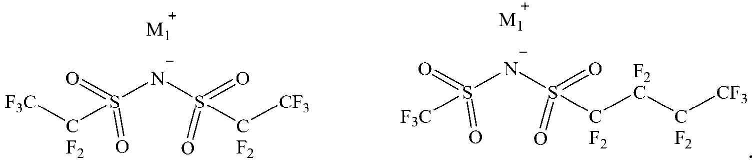

In some embodiments, the first electrolyte salt may include one or more of the following:

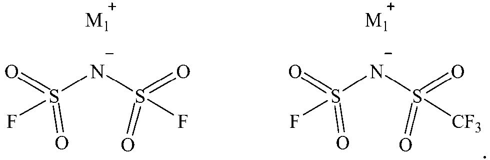

In some embodiments, the first electrolyte salt may include one or more of A1 to A7:

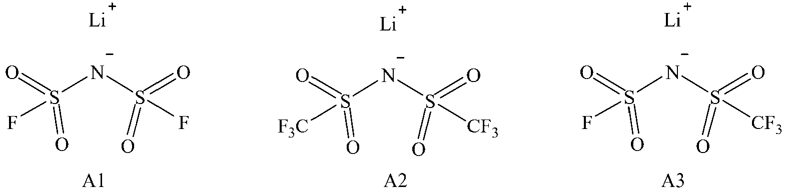

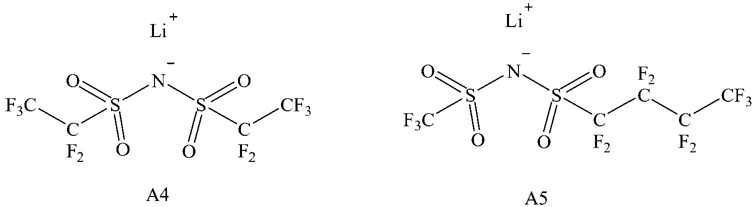

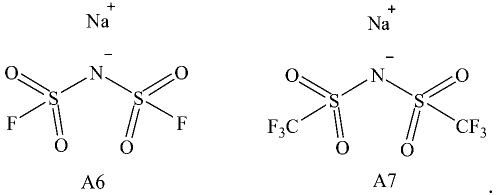

Alternatively, the first electrolyte salt may include one or more of A1 to A4.

Optionally, the first electrolyte salt may include one or more of A1 and A3.

When the first electrolyte salt is within the foregoing range, the first electrolyte salt has higher thermal stability and is less prone to hydrolysis, and this further helps further improve the conductivity of the electrolytic solution, thereby helping further improve the cycle performance of the battery. In addition, when the first electrolyte salt is within the foregoing range, this further helps form a relatively thin interfacial layer and reduce the interfacial ionic impedance, thereby reducing the internal resistance of the battery and improving the dynamic performance of the battery.

In some embodiments, R₃ and R₄ each may independently include a fluorine atom, trifluoromethyl, pentafluoroethyl, heptafluoropropyl, and nonafluorobutyl. Optionally, at least one of R₃ or R₄ represents a fluorine atom.

When R₃ and R₄ are within the foregoing ranges, this further helps form a relatively thin interfacial layer, thereby further helping reduce the interfacial ionic impedance, reduce the internal resistance of the battery, and improve the dynamic performance of the battery.

In some embodiments, the first additive may include one or more of B1 to B5:

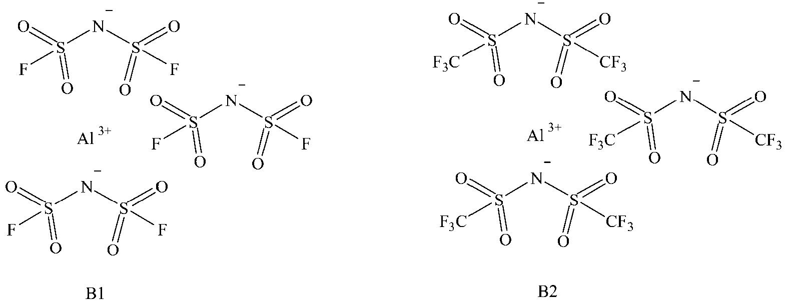

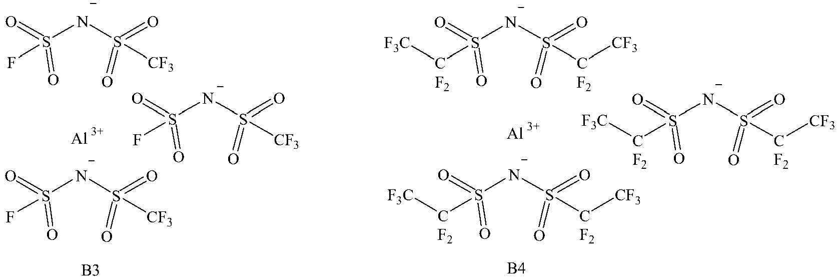

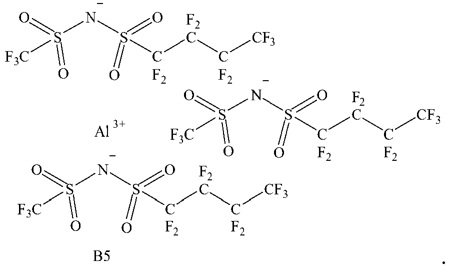

Optionally, the first additive may include one or more of B1 to B4:

Optionally, the first additive may include one or more of B1 or B3.

When the first additive is within the foregoing range, the first additive has higher thermal stability and is less prone to hydrolysis, and this further helps further improve the conductivity of the electrolytic solution, thereby helping further improve the cycle performance of the battery. In addition, when the first additive is within the foregoing range, this further helps form a relatively thin interfacial layer and reduce the interfacial ionic impedance, thereby further reducing the internal resistance of the battery and improving the dynamic performance of the battery.

In some embodiments, the anion of the first electrolyte salt shown in formula (1) is the same as an anion of the first additive shown in formula (2).

In some embodiments, the electrolytic solution may further include a second electrolyte salt, and the second electrolyte salt may include one or more of the following:

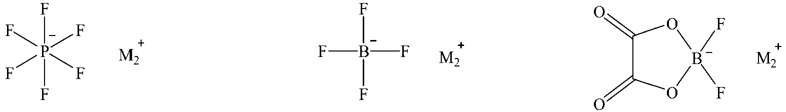

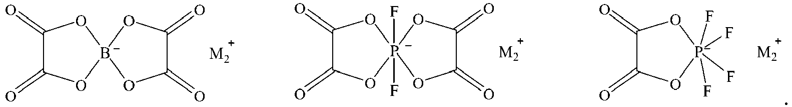

M₂ includes one or more of Li, Na, or K.

The second electrolyte salt can passivate the positive electrode current collector, for example, can form an insoluble product such as LiF, thereby protecting the positive electrode current collector and reducing corrosion of the positive electrode current collector by the first electrolyte salt. Therefore, when the electrolytic solution further includes the second electrolyte salt, the cycle performance of the battery can be further improved.

Optionally, M₂ includes one or more of Li or Na.

Optionally, M₂ includes Li.

In some embodiments, the second electrolyte salt may include one or more of the following:

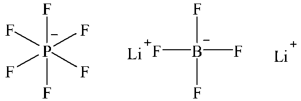

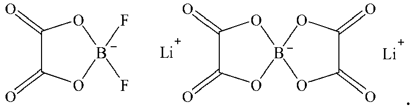

In some embodiments, the content by weight of the second electrolyte salt in the electrolytic solution is denoted as m, which is calculated based on the total weight of the electrolytic solution, and m/(x+m) may be greater than or equal to 15%. Optionally, m/(x+m) may be greater than or equal to 30%, greater than or equal to 40%, greater than or equal to 50%, or greater than or equal to 60%.

The content of the second electrolyte salt is adjusted, so that the electrolytic solution can further have both high conductivity and low viscosity, thereby further improving the cycle performance of the battery.

In some embodiments, the electrolytic solution may further include a second additive shown in formula (3), R₅ includes a fluorine atom and C1-C6 fluoroalkyl, and M₃ includes one or more of Li, Na, or K:

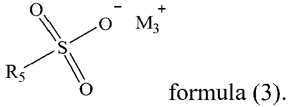

The second additive shown in formula (3) has relatively high thermal stability, and also helps form a thinner and more flexible interfacial layer, thereby helping further improve the cycle performance and/or dynamic performance of the battery.

In some embodiments, the content by weight of the second additive in the electrolytic solution is denoted as n, which is calculated based on the total weight of the electrolytic solution, and 0.01%≤n≤1%. Optionally, 0.01%≤n≤0.5%.

In some embodiments, R₅ may include a fluorine atom, trifluoromethyl, pentafluoroethyl, heptafluoropropyl, and nonafluorobutyl, and optionally, include a fluorine atom, trifluoromethyl, and pentafluoroethyl.

When R₅ is within the foregoing ranges, this further helps further help form a thinner interfacial layer, thereby further reducing the interfacial ionic impedance, reducing the internal resistance of the battery, and improving the dynamic performance of the battery.

In some embodiments, M₃ includes one or more of Li or Na.

In some embodiments, M₃ includes Li.

In some embodiments, the second additive may include one or more of the following:

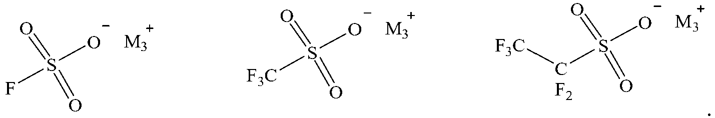

Optionally, the second additive may include one or more of D1 to D6:

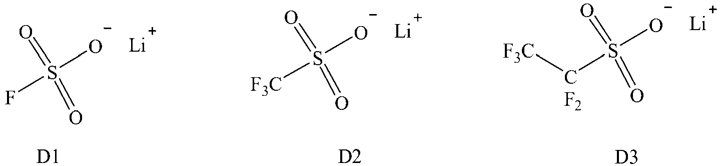

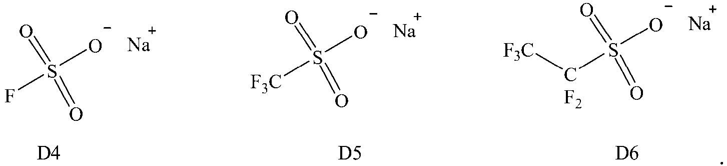

In some embodiments, the electrolytic solution may further include a third additive shown in formula (4), and M₄ includes one or more of Li, Na, or K.

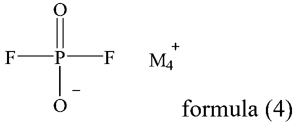

The third additive is usually decomposed in the electrolytic solution earlier than a non-aqueous solvent, so that a low-impedance interfacial layer can be generated on the positive electrode, and the interfacial layer can protect the positive electrode active material, to reduce oxidative decomposition of the electrolytic solution on a surface of the positive electrode, reduce an amount of gas generated by the battery, improve the high-temperature storage performance of the battery, reduce the charge transfer resistance of the positive electrode, and improve the cycle performance and/or dynamic performance of the positive electrode. Meanwhile, the third additive can also generate a low-resistance interfacial layer on the negative electrode, to protect the negative electrode active material and reduce reductive decomposition of the electrolytic solution on a surface of the negative electrode. Therefore, when the electrolytic solution further includes the third additive, the storage performance, cycle performance, and/or dynamic performance of the battery can be further improved.

In some embodiments, the content by weight of the third additive in the electrolytic solution is denoted as p, which is calculated based on the total weight of the electrolytic solution, and 0.01%≤p≤1%. Optionally, 0.01%≤p≤0.5%.

In some embodiments, M₄ includes one or more of Li or Na.

In some embodiments, M₄ includes Li.

In some embodiments, the electrolytic solution may further include another additive, for example, an additive for improving overcharge performance of the battery or an additive for improving low-temperature power performance of the battery. This is not limited in this embodiment of the present application.

In some embodiments, the electrolytic solution further includes a non-aqueous solvent, and the non-aqueous solvent may include one or more of cyclic carbonate, linear carbonate, or carboxylic ester.

In some implementations, the cyclic carbonate may include one or more of ethylene carbonate (EC), propylene carbonate (PC), or butyl carbonate (BC).

In some embodiments, the linear carbonate may include one or more of ethyl methyl carbonate (EMC), diethyl carbonate (DEC), dimethyl carbonate (DMC), dipropyl carbonate (DPC), methyl propyl carbonate (MPC), or ethyl propyl carbonate (EPC).

In some embodiments, the carboxylic ester may include one or more of methyl formate (MF), methyl acetate (MA), ethyl acetate (EA), propyl acetate (PA), methyl propionate (MP), ethyl propionate (EP), propyl propionate (PP), methyl butyrate (MB), or ethyl butyrate (EB).

In some embodiments, the non-aqueous solvent may include cyclic carbonate and linear carbonate. The cyclic carbonate has a relatively high dielectric constant and can increase the conductivity of the electrolytic solution. The linear carbonate has relatively low viscosity and can reduce the viscosity of the electrolytic solution. Therefore, when the non-aqueous solvent includes both the cyclic carbonate and the linear carbonate, it helps the electrolytic solution to have proper viscosity and conductivity, thereby facilitating transmission of the lithium ion.

Optionally, the content by weight of the cyclic carbonate in the non-aqueous solvent is denoted as a, which is calculated based on the total weight of the non-aqueous solvent, and 1%≤a≤35%, and optionally, 3%≤a≤30%.

Optionally, the content by weight of the linear carbonate in the non-aqueous solvent is denoted as b, which is calculated based on the total weight of the non-aqueous solvent, and 65%≤b≤99%, and optionally, 66%≤a≤94%.

In some embodiments, the content by weight of the carboxylic ester in the non-aqueous solvent is denoted as c, which is calculated based on the total weight of the non-aqueous solvent, and 0≤c≤30%, and optionally, 1%≤c≤20%. Therefore, the carboxylic ester helps the electrolytic solution to have proper viscosity and conductivity, thereby facilitating transmission of the lithium ion.

In some embodiments, the non-aqueous solvent may further include a solvent other than the cyclic carbonate, the linear carbonate, and the carboxylic ester. In an example, the another solvent may include a sulfone solvent such as sulfolane (SF), methylsulfonylmethane (MSM), ethyl methyl sulfone (EMS), diethyl sulfone (ESE), or the like.

The electrolytic solution provided in this embodiment of the present application may be referred to as an electrolytic solution after being mixed uniformly. The electrolytic solution may be prepared in a conventional method in the art. For example, components such as the non-aqueous solvent, all electrolyte salts, and all additives may be uniformly mixed to obtain the electrolytic solution. The order of adding materials is not particularly limited. For example, components such as the electrolyte salt and the additive may be added to the non-aqueous solvent and mixed uniformly, to obtain the electrolytic solution.

The components in the electrolytic solution and the contents thereof can be measured in the method known in the art, for example, may be measured through gas chromatography-mass spectrometry (GC-MS), ion chromatography (IC), liquid chromatography (LC), or nuclear magnetic resonance spectroscopy (NMR). A cation and an anion are usually dissociated from the electrolyte salt and some additives in the non-aqueous solvent. Therefore, the content of each component can also be measured by detecting the content of the cation and/or the anion.

### [Positive electrode sheet]

A battery cell further includes a positive electrode sheet.

The positive electrode sheet includes a positive electrode current collector and a positive electrode film layer disposed on at least one surface of the positive electrode current collector. For example, the positive electrode current collector has two surfaces opposite in a thickness direction of the positive electrode current collector, and the positive electrode film layer is located on either one or both of the two opposite surfaces of the positive electrode current collector.

The positive electrode current collector may include an aluminum foil, an aluminum alloy foil, an aluminum mesh, an aluminum alloy mesh, or a composite current collector with a surface containing aluminum or an aluminum alloy.

To improve the corrosion resistance and strength of the positive electrode current collector, optionally, an aluminum foil with purity of 99.99% or more is used.

The aluminum alloy may be an alloy of metallic aluminum with other metal elements or non-metal elements. The aluminum alloy foil may include another metal element and/or a non-metal element in addition to an aluminum element. For example, the another metal element may include at least one element in iron, magnesium, zinc, manganese, tin, lithium, sodium, silver, gold, gallium, indium, and platinum, and the non-metal element may include at least one element in silicon, boron, and carbon. In an example, the aluminum alloy foil may be an Al-Fe alloy foil, an Al-Mn alloy foil, or an Al-Mg alloy foil. The mass percentage of the aluminum element in the aluminum alloy foil is optionally 95% to 99.5%, and more optionally 98% to 99.5%.

In the present application, the aluminum foil and the aluminum alloy foil may be continuous non-porous foils, perforated foils, foils in a form of foam, etc. This is not limited in this embodiment of the present application.

In the present application, the aluminum mesh and the aluminum alloy mesh may be of braided structures. This is not limited in this embodiment of the present application. Wires in the aluminum mesh or the aluminum alloy mesh may further include another metal wire and/or a non-metal wire (for example, a carbon fiber) in addition to an aluminum wire or an aluminum alloy wire. This is not limited in this embodiment of the present application.

The composite current collector may include a base layer and a metal material layer formed on at least one surface of the base layer. The metal material layer includes aluminum or an aluminum alloy.

The base layer and the metal material layer may be bonded together by using a binder, to form the composite current collector. A metal material may also be evaporated on a surface of the base layer, to form the composite current collector.

In an example, the base layer may include a polymer material base layer and another metal material base layer.

In an example, the polymer material base layer may include a polymer material, and may further include one or more of an inorganic conductive filler or an inorganic non-conductive filler.

The polymer material may include one or more of polyethylene terephthalate (PET), polybutylene terephthalate (PBT), polystyrene (PS), polypropylene (PP), polyethylene (PE), polypropylene ethylene, polyvinyl chloride, polytetrafluoroethylene, polyvinylidene fluoride, polyamide, polyimide, aramid, an epoxy resin, a phenolic resin, a silicone rubber, polycarbonate, cellulose, polyoxymethylene, polyvinyl alcohol, or polyethylene glycol. This is not limited in this embodiment of the present application.

In an example, the inorganic conductive filler may include one or more of superconducting carbon, conductive graphite, acetylene black, carbon black, ketjen black, a carbon dot, a carbon nanotube, graphene, or a carbon nanofiber. This is not limited in this embodiment of the present application. The inorganic non-conductive filler may include one or more of a ceramic material or a glass material. This is not limited in this embodiment of the present application.

The positive electrode film layer usually includes a positive electrode active material, an optional binder, and an optional conductive agent. The positive electrode film layer is usually formed by applying a positive electrode slurry on the positive electrode current collector, followed by drying and cold pressing. The positive electrode slurry is usually formed by dispersing the positive electrode active material, the optional binder, the optional conductive agent, and any other component in a solvent and performing uniform stirring.

The solvent may be N-methylpyrrolidone (NMP), but is not limited thereto.

In an example, the binder used at the positive electrode film layer may include one or more of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, or a fluorine-containing acrylate resin.

In an example, the conductive agent used at the positive electrode film layer may include one or more of superconducting carbon, conductive graphite, acetylene black, carbon black, ketjen black, a carbon dot, a carbon nanotube, graphene, or a carbon nanofiber.

In some embodiments, the positive electrode active material includes a first positive electrode active material, and a voltage plateau of the first positive electrode active material is greater than or equal to 3.6 V.

The first positive electrode active material has a high voltage plateau, to help improve the energy density of a battery, but the thermal stability and cycle stability of the first positive electrode active material are usually relatively poor. Combined use of the first positive electrode active material of the high voltage plateau and the electrolytic solution provided in this embodiment of the present application can fully bring the advantage of the first positive electrode active material of the high voltage plateau, so that the battery has both high energy density and good cycle performance.

The voltage plateau of the first positive electrode active material is a well-known meaning in the art, is usually a voltage value corresponding to a stable plateau on which a discharge voltage does not change significantly in a voltage-capacity curve (charge and discharge curve) of the battery or a voltage value with the longest maintenance time in a discharge process, and can also be obtained based on a differential capacity curve. A location at which a peak occurs in the differential capacity curve indicates that the charge and discharge curve has a voltage plateau.

During a test, the first positive electrode active material may be assembled into a button cell battery for a charge and discharge test, and the charge and discharge rate may be 0.1 C.

In some embodiments, the first positive electrode active material may include one or more of lithium cobalt oxide, a lithium nickel cobalt manganese ternary material, a lithium nickel cobalt aluminum ternary material, or respective modified compounds thereof.

In some embodiments, the first positive electrode active material may include one or more of a ternary material with a general formula of LiₐNi_{b}Co_{c}M1_{d}M2ₑO_{f}A_{g} and a modified compound thereof. 0.8≤a≤1.2, 0.5≤b<1, 0<c<1, 0<d<1, 0≤e<1, 1≤f≤2, 0≤g≤1, M1 includes Mn and/or Al, M2 includes one or more of Zr, Zn, Cu, Cr, Mg, Fe, V, Ti, and B, and A includes one or more of N, F, S, and Cl.

The positive electrode active material with a high nickel content has a high voltage plateau and a high gram capacity, to help improve the energy density of the battery, but the thermal stability and cycle stability of the positive electrode active material are poor. Combined use of the positive electrode active material with a high nickel content and the electrolytic solution provided in this embodiment of the present application can fully bring the advantage of the positive electrode active material with a high nickel content, so that the battery has both high energy density and good cycle performance.

In an example, the first positive electrode active material may include one or more of LiNi_{0.5}Co_{0.2}Mn_{0.3}O₂(NCM523), LiNi_{0.6}Co_{0.2}Mn_{0.2}O₂(NCM622), LiNi_{0.8}Co_{0.1}Mn_{0.1}O₂(NCM811), LiNi_{0.85}Co_{0.15}Al_{0.05}O₂, and respective modified compounds thereof.

In some embodiments, the positive electrode active material may further include a second positive electrode active material, and the second positive electrode active material includes one or more of lithium-containing phosphate and a modified compound thereof. In an example, the lithium-containing phosphate may include one or more of lithium iron phosphate, a composite material of lithium iron phosphate and carbon, lithium manganese phosphate, a composite material of lithium manganese phosphate and carbon, lithium ferromanganese phosphate, a composite material of lithium ferromanganese phosphate and carbon, and respective modified compounds thereof.

The modified compound of each of the above positive electrode active materials may be a compound of the positive electrode active material subjected to doping modification and/or surface coating modification. For example, a coating layer may be a carbon coating layer. The carbon coating layer helps stabilize a surface of the positive electrode active material, and further reduce the charge transfer impedance of the positive electrode active material and improve the dynamic performance of the positive electrode active material. Optionally, the carbon coating layer includes amorphous carbon, for example, soft carbon, hard carbon, or a combination thereof.

In some embodiments, the weight percentage content of the first positive electrode active material may be greater than or equal to 50%, which is calculated based on the total weight of the positive electrode film layer. For example, the weight percentage content of the first positive electrode active material may be 50%, 60%, 70%, 80%, 81%, 82%, 83%, 84%, 85%, 86%, 87%, 88%, 89%, 90%, 91%, 92%, 93%, 94%, 95%, 96%, 97%, 98%, 99%, or a range including any of the foregoing values. Optionally, the weight percentage content of the first positive electrode active material may be 50% to 99%, 60% to 99%, 70% to 99%, 80% to 99%, 85% to 99%, 90% to 99%, 95% to 99%, 80% to 98%, 85% to 98%, 90% to 98%, 95% to 98%, 80% to 97%, 85% to 97%, 90% to 97%, or 95% to 97%.

### [Negative electrode sheet]

A battery cell includes the negative electrode sheet.

In some embodiments, the negative electrode sheet includes a negative electrode current collector and a negative electrode film layer disposed on at least one surface of the negative electrode current collector. For example, the negative electrode current collector has two surfaces opposite in a thickness direction of the negative electrode current collector, and the negative electrode film layer is located on either one or both of the two opposite surfaces of the negative electrode current collector.

For the negative electrode current collector, a metal foil or a composite current collector may be used. In an example of the metal foil, a copper foil may be used. The composite current collector may include a polymer material base layer and a metal material layer formed on at least one surface of the polymer material base layer. In an example, the metal material may include one or more of copper, a copper alloy, nickel, a nickel alloy, titanium, a titanium alloy, silver, and a silver alloy. In an example, the polymer material base layer may include one or more of polypropylene (PP), polyethylene terephthalate (PET), polybutylene terephthalate (PBT), polystyrene (PS), and polyethylene (PE).

The negative electrode film layer usually includes a negative electrode active material, an optional binder, an optional conductive agent, and another optional adjunct. The negative electrode film layer is usually formed by applying a negative electrode slurry on the negative electrode current collector, followed by drying and cold pressing. The negative electrode slurry is usually formed by dispersing the negative electrode active material, the optional conductive agent, the optional binder, and the another optional adjunct in a solvent and performing uniform stirring.

The solvent may be N-methylpyrrolidone (NMP) or de-ionized water, but is not limited thereto.

In an example, the binder used at the negative electrode film layer may include one or more of a styrene-butadiene rubber (SBR), an aqueous unsaturated resin SR-1B, an aqueous acrylic resin (for example, polyacrylic acid PAA, polymethacrylic acid PMAA, and sodium polyacrylate PAAS), polyacrylamide (PAM), polyvinyl alcohol (PVA), sodium alginate (SA), or carboxymethyl chitosan (CMCS).

In an example, the conductive agent used at the negative electrode film layer may include one or more of superconducting carbon, acetylene black, carbon black, ketjen black, a carbon dot, a carbon nanotube, graphene, or a carbon nanofiber. The another optional adjunct may include a thickening agent (for example, sodium carboxymethyl cellulose (CMC) sodium) and a PTC thermistor material.

The negative electrode active material may be a well-known material in the art. In an example, the negative electrode active material may include one or more of natural graphite, synthetic graphite, hard carbon, soft carbon, a silicon-based material, a tin-based material, and lithium titanate. The silicon-based material may include one or more of elemental silicon, a silicon-oxygen compound, a silicon-carbon composite, a silicon-nitrogen composite, or a silicon alloy material. The tin-based material may include one or more of elemental tin, a tin-oxygen compound, and a tin alloy material. The present application is not limited to these materials, and another conventional well-known material that can be used as a negative electrode active material may also be used. One of these negative electrode active materials may be used alone or two or more thereof may be used in combination.

### [Separator]

A battery cell may further include the separator.

The separator is disposed between the positive electrode sheet and the negative electrode sheet, to play a separating role. The type of the separator is not particularly limited in the present application, and any well-known film with a porous structure and having good chemical stability and mechanical stability may be selected.

In some embodiments, a material of the separator may include one or more of a glass fiber, non-woven fabric, polyethylene, polypropylene, or polyvinylidene fluoride. The separator may be a single-layer film or a multilayer composite film. When the separator is a multilayer composite thin film, materials of all the layers are the same or different.

### Preparation method

An embodiment of the present application further provides a preparation method for a battery cell.

The method includes the following steps: providing a cell container including a positive electrode sheet and a negative electrode sheet; and injecting the electrolytic solution provided in the embodiments of the present application into the cell container, to obtain a battery cell.

In some embodiments, the cell container further includes a separator.

In some embodiments, the method may further include the following steps: fabricating the positive electrode sheet, the separator, and the negative electrode sheet may be into an electrode assembly by using a winding process and/or a lamination process; and placing the electrode assembly in the cell container.

The cell container may be an outer package. The outer package may be a hard shell, such as a hard plastic shell, an aluminum shell, or a steel shell. The outer package may also be a pouch, such as a bag-type pouch. The material of the pouch may be plastic, such as one or more of polypropylene (PP), polybutylene terephthalate (PBT), and polybutylene succinate (PBS).

In some embodiments, the electrolytic solution provided in the embodiments of the present application is injected into the cell container, followed by procedures such as standing and formation, to obtain the battery cell.

A plurality of battery cells may be further connected in series, in parallel, or in parallel-series to form a battery module. A plurality of battery modules may also be connected in series, in parallel, or in parallel-series to form a battery pack. In some embodiments, a plurality of battery cells may also directly form a battery pack.

### Electrical device

An embodiment of the present application further provides an electrical device including the battery provided in the embodiments of the present application. The battery may be used as a power supply for the electrical device, or as an energy storage unit for the electrical device. The electrical device may include, but is not limited to, a mobile apparatus (e.g., a cell phone, a tablet computer, a notebook computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, and the like.

The type of the battery of the electrical device may be selected according to a use demand, for example, a battery cell, a battery module, or a battery pack.

FIG. 6 is a schematic diagram of an example electrical device. The electrical device is a pure electric vehicle, a hybrid electric vehicle, a plug-in hybrid electric vehicle, or the like. To satisfy the demands for high power and high energy density of the electrical device, a battery pack or a battery module may be used.

As another example, the electrical device may be a cell phone, a tablet computer, a notebook computer, or the like. The electrical device is generally required to be light and thin, and may use a battery cell as a power supply.

### Examples

The following examples describe the disclosure of the present application more specifically. These examples are used only for illustration, since various modifications and changes made within the scope of the disclosure of the present application are obvious to those skilled in the art. Unless otherwise stated, all parts, percentages, and ratios reported in the following examples are based on a weight. All reagents used in the examples are commercially available or can be synthesized according to conventional methods, and can be used directly without further treatment. All instruments used in the examples are commercially available.

### Preparation is performed in the following manner in Examples 1-19 and comparative examples 1-3

### Preparation of a positive electrode sheet

A positive electrode active material LiNi_{0.8}Co_{0.1}Mn_{0.1}O₂, a conductive agent carbon black, a binder polyvinylidene fluoride (PVDF) are sufficiently stirred and mixed in a proper quantity of solvents NMP at a weight ratio of 97.5:1.4:1.1, to form a uniform positive electrode slurry. The positive electrode slurry is uniformly coated on a surface of a positive electrode current collector aluminum foil, followed by drying and cold pressing, to obtain the positive electrode sheet.

### Preparation of a negative electrode sheet

A negative electrode active material graphite, a binder styrene-butadiene rubber (SBR), a thickener sodium carboxymethyl cellulose (CMC-Na), and a conductive agent carbon black (Super P) are sufficiently stirred and mixed in a proper quantity of solvents deionized water at a weight ratio of 96.2:1.8:1.2:0.8, to form a uniform negative electrode slurry. The negative electrode slurry is uniformly coated on a surface of a negative electrode current collector copper foil, followed by drying and cold pressing, to obtain the negative electrode sheet.

### Separator

A porous polyethylene (PE) film was used as a separator.

### Preparation of an electrolytic solution

Ethylene carbonate (EC), ethyl methyl carbonate (EMC), and diethyl carbonate (DEC) are uniformly mixed at a weight ratio of 3:5:2, to obtain a non-aqueous solvent. All electrolyte salts and all additives shown in Table 1 are dissolved in the non-aqueous solvent based on the content by weight shown in Table 1, and are stirred uniformly to obtain the electrolytic solution.

In Table 1, the content by weight of the first electrolyte salt is denoted as x, the content by weight of the second electrolyte salt is denoted as m, and the content by weight of the first additive is denoted as y, all of which are calculated based on the total weight of the electrolytic solution.

In Table 1, "/" indicates that the electrolytic solution does not include a corresponding component.

Electrolyte salts and additives in Examples 1 to 19 are abbreviated as follows:

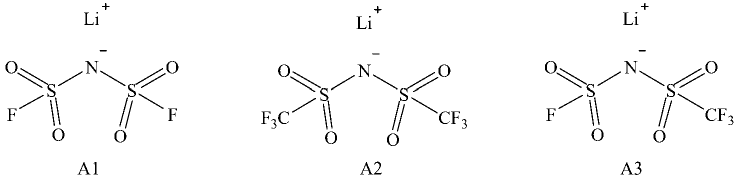

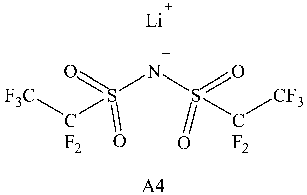

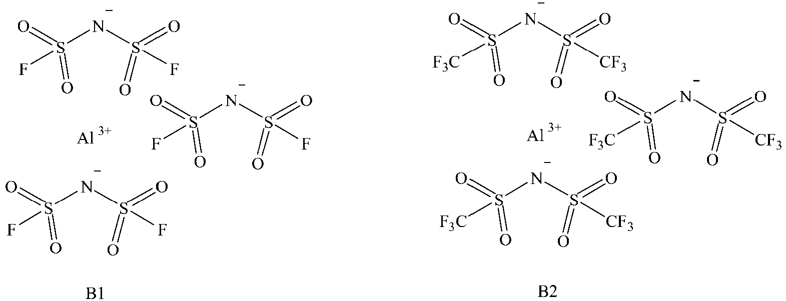

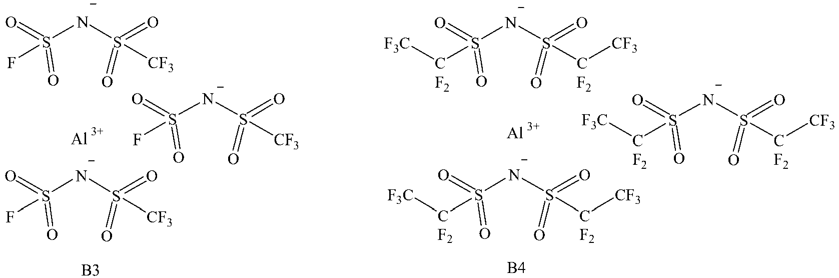

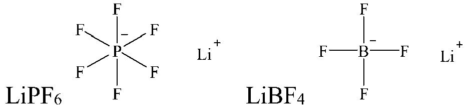

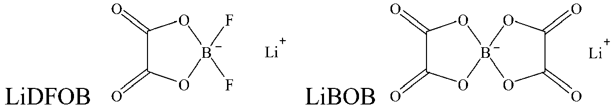

### Preparation of a battery

A positive electrode sheet, a separator, and a negative electrode sheet are sequentially stacked and wound to obtain an electrode assembly; and the electrode assembly is placed in an outer package, and the foregoing electrolytic solution is injected, followed by procedures such as packing, standing, and formation, to obtain the battery.

### Test Section

### (1) Cycle performance test

At 45°C, a battery is charged at a constant current of 1 C to 4.3 V, and continues to be charged at a constant voltage to a current of 0.05 C. In this case, the battery is in a fully charged state, and a charging capacity at this point is recorded as a charging capacity at the first cycle. After the battery is standing for 5 min, the battery is discharged at a constant current of 1 C to 2.8 V. This is one cyclic charge and discharge process. A discharging capacity at this point is recorded as a discharging capacity at the first cycle. The battery is subjected to a cyclic charge and discharge test in the foregoing method, and a discharging capacity after each cycle is recorded. Capacity retention rate of the battery after 600 cycles at 45 °C=Discharging capacity after 600 cycles/discharging capacity at the first cycle×100%.

### (2) Initial direct-current internal resistance test of a battery

At 25 °C, a battery is charged at a constant current of 1 C to 4.3 V, and continues to be charged at a constant voltage to a current of 0.05 C. In this case, the battery is in a fully charged state. The battery is discharged at a constant current of 0.5 C to adjust the battery to 50% SOC. In this case, a voltage of the battery is denoted as U₁. The battery is discharged at a constant current, namely, a current I₁ of 4 C for 30 seconds, sampling is performed every 0.1 second, and a voltage at the end of discharge is denoted as U₂. Discharge direct current internal resistance at 50% SOC of the battery represents initial direct current internal resistance of the battery. Initial direct current internal resistance (mΩ) of the battery=(U₁-U₂)/I₁.

Test results are shown in Table 1.

**Table 1**

| Sequence number | First electrolyte salt | | Second electrolyte salt | | m/(x+m) | First additive | | x/y | Capacity retention rate (%) after 600 cycles at 45°C | Initial direct current internal resistance (mQ) |
|---|---|---|---|---|---|---|---|---|---|---|
| | Type | x | Type | m | | Type | y | | | |
| Comparative example 1 | A1 | 10% | LiPF₆ | 8% | 44% | / | / | / | 73.3 | 30.1 |
| Comparative example 2 | A1 | 10% | LiPF₆ | 8% | 44% | B1 | 0.500% | 20 | 77.9 | 28.8 |
| Comparative example 3 | A1 | 10% | LiPF₆ | 8% | 44% | B1 | 0.010% | 1000 | 78.1 | 28.1 |
| Example 1 | A1 | 10% | LiPF₆ | 8% | 44% | B1 | 0.200% | 50 | 85.1 | 24.4 |
| Example 2 | A1 | 10% | LiPF₆ | 8% | 44% | B1 | 0.100% | 100 | 88.3 | 23.1 |
| Example 3 | A1 | 10% | LiPF₆ | 8% | 44% | B1 | 0.080% | 125 | 90.5 | 22.1 |
| Example 4 | A1 | 10% | LiPF₆ | 8% | 44% | B1 | 0.050% | 200 | 91.1 | 20.9 |
| Example 5 | A1 | 10% | LiPF₆ | 8% | 44% | B1 | 0.040% | 250 | 89.9 | 23.1 |
| Example 6 | A1 | 10% | LiPF₆ | 8% | 44% | B1 | 0.025% | 400 | 87.9 | 23.3 |
| Example 7 | A1 | 10% | LiPF₆ | 8% | 44% | B1 | 0.020% | 500 | 86.3 | 24.1 |
| Example 8 | A1 | 5% | LiPF₆ | 13% | 72% | B1 | 0.040% | 125 | 89.8 | 23.2 |
| Example 9 | A1 | 5% | LiPF₆ | 13% | 72% | B1 | 0.025% | 200 | 89.7 | 23.4 |
| Example 10 | A1 | 15% | LiPF₆ | 3% | 17% | B1 | 0.100% | 150 | 91.0 | 21.0 |
| Example 11 | A1 | 15% | LiPF₆ | 3% | 17% | B1 | 0.050% | 300 | 90.8 | 20.8 |
| Example 12 | A1 | 16% | LiPF₆ | 2% | 11% | B1 | 0.100% | 160 | 88.9 | 21.4 |
| Example 13 | A2 | 10% | LiPF₆ | 8% | 44% | B2 | 0.050% | 200 | 90.1 | 21.3 |
| Example 14 | A3 | 10% | LiPF₆ | 8% | 44% | B3 | 0.050% | 200 | 90.4 | 21.1 |
| Example 15 | A4 | 10% | LiPF₆ | 8% | 44% | B4 | 0.050% | 200 | 90.0 | 21.3 |
| Example 16 | A1 | 10% | LiPF₆+LiBOB | 7%+1% | 44% | B1 | 0.050% | 200 | 89.6 | 21.7 |
| Example 17 | A1 | 10% | LiPF₆+LiDFOB | 7%+1% | 44% | B1 | 0.050% | 200 | 89.3 | 21.0 |
| Example 18 | A1 | 10% | LiPF₆+LiBF₄ | 7%+1% | 44% | B1 | 0.050% | 200 | 89.0 | 22.1 |
| Example 19 | A1 | 10% | LiPF₆+LiBF₄+LiDFOB | 6%+1%+1% | 44% | B1 | 0.050% | 200 | 89.2 | 22.5 |

It can be seen from all the test results in Table 1 that, an electrolytic solution includes a first electrolyte salt shown in formula (1) and a first additive shown in formula (2), and the content by weight x of the first electrolyte salt and the content by weight y of the first additive are adjusted to satisfy 50≤x/y≤500, so that dissolution of a soluble product formed after a corrosion reaction between the first electrolyte salt and the positive electrode current collector into the electrolytic solution can be reduced. Therefore, this can reduce corrosion of the positive electrode current collector and improve the cycle performance of the battery, and further reduce the initial direct current internal resistance of the battery and improve the dynamic performance of the battery.

It can be further learned from all the test results in Table 1 that a range of x/y is further adjusted, to further improve the cycle performance of the battery, and further reduce the initial direct current internal resistance of the battery.

It can be learned from all the test results in Table 1 that a range of m/(x+m) is further adjusted, to further improve the cycle performance of the battery, and further reduce the initial direct current internal resistance of the battery.

In Examples 20-22, a second additive and a third additive shown in Table 2 are further added based on the electrolytic solution prepared in Example 4, the content by weight of the second additive is denoted as n, and the content by weight of the third additive is denoted as p, which are all calculated based on the total weight of the electrolytic solution.

An electrolyte salt and an additive in Examples 20 to 22 are abbreviated as follows:

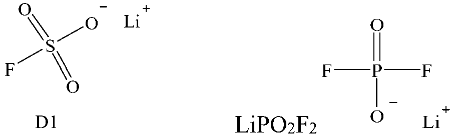

**Table 2**

| Sequence number | Second additive | | Third additive | | x/y | Capacity retention rate (%) after 600 cycles at 45°C | Initial direct current internal resistance (mΩ) |
|---|---|---|---|---|---|---|---|
| | Type | n | Type | P | | | |
| Example 4 | / | / | / | / | 200 | 91.1 | 20.9 |
| Example 20 | D1 | 0.20% | / | / | 200 | 91.4 | 20.5 |
| Example 21 | / | / | LiPO₂F₂ | 0.20% | 200 | 91.3 | 20.4 |
| Example 22 | D1 | 0.20% | LiPO₂F₂ | 0.20% | 200 | 92.1 | 20.0 |

It can be learned from all the test results in Table 2 that, the electrolytic solution further includes the second additive with a proper content and/or the third additive with a proper content, to further improve the cycle performance of the battery, and further reduce the initial direct current internal resistance of the battery.

It should be noted that the present application is not limited to the above-described implementation. The above-described implementation is merely an example, and any implementation having substantially the same configuration as the technical concept and exhibiting the same operation and effect within the scope of the claims of the present application is included in the technical scope of the present application. In addition, various modifications that can be conceived by those skilled in the art may be made to the embodiments without departing from the subject matter of the present application, and other embodiments constructed by combining some of the constituent elements in the embodiments are also included in the scope of the present application.

## Claims

1. An electrolytic solution, wherein
the electrolytic solution comprises an electrolyte salt and an additive;
the electrolyte salt comprises a first electrolyte salt shown in formula (1), R₁ and R₂ each independently comprise a fluorine atom and C1-C6 fluoroalkyl, and M₁ comprises one or more of Li, Na, or K: 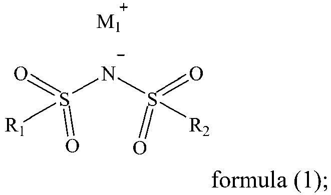
the additive comprises a first additive shown in formula (2), and R₃ and R₄ each independently comprise a fluorine atom and C1-C6 fluoroalkyl: 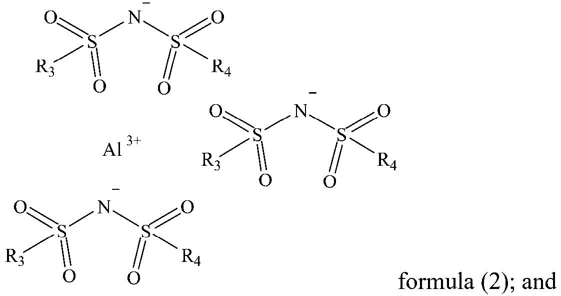
the content by weight of the first electrolyte salt in the electrolytic solution is denoted as x, the content by weight of the first additive in the electrolytic solution is denoted as y, both of which are calculated based on the total weight of the electrolytic solution, and 50≤x/y≤500.

2. The electrolytic solution according to claim 1, wherein 100≤x/z≤400, and optionally, 125≤x/z≤300.

3. The electrolytic solution according to claim 1 or 2, wherein
1%≤x≤15%, and optionally, 7%≤x≤12%; and/or
0.01%≤y≤0.20%, and optionally, 0.025%≤y≤0.10%.

4. The electrolytic solution according to any one of claims 1 to 3, wherein
R₁ and R₂ each independently comprise a fluorine atom, trifluoromethyl, pentafluoroethyl, heptafluoropropyl, and nonafluorobutyl, and optionally, at least one of R₁ or R₂ represents a fluorine atom; and/or
R₃ and R₄ each independently comprise a fluorine atom, trifluoromethyl, pentafluoroethyl, heptafluoropropyl, and nonafluorobutyl, and optionally, at least one of R₃ or R₄ represents a fluorine atom.

5. The electrolytic solution according to any one of claims 1 to 4, wherein
the first electrolyte salt comprises one or more of the following: 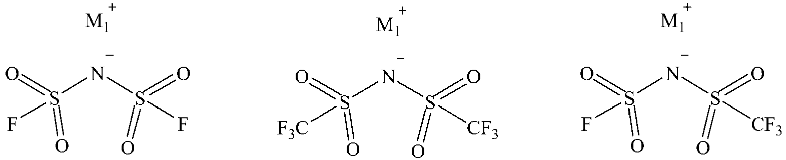 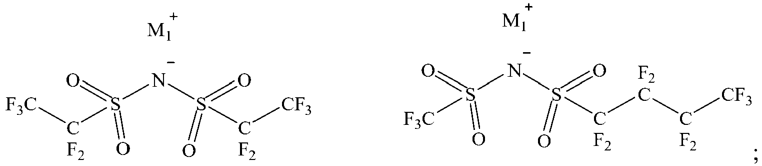
optionally, the first electrolyte salt comprises one or more of A1 to A7: 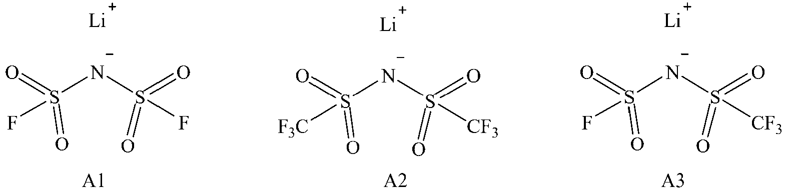 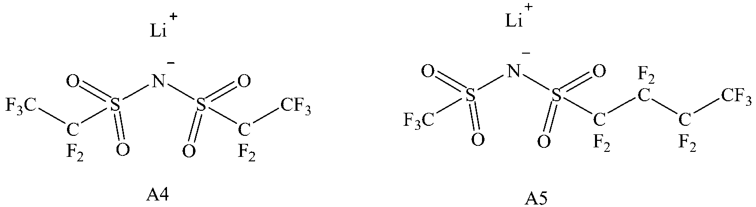 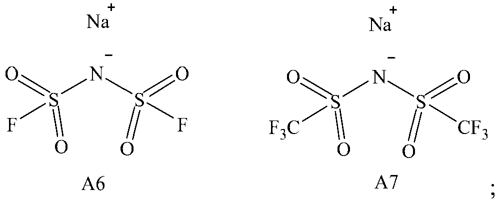
and/or
the first additive comprises one or more of B1 to B5:

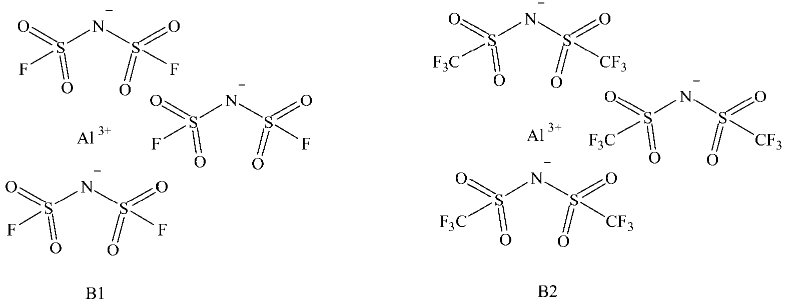

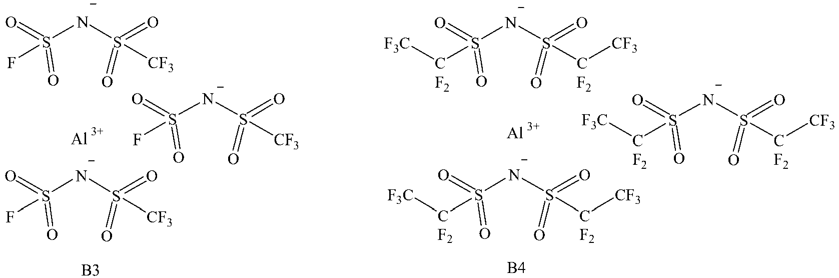

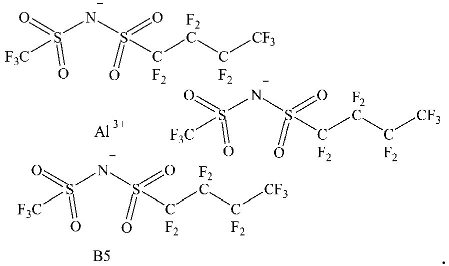

6. The electrolytic solution according to any one of claims 1 to 5, wherein an anion of the first electrolyte salt shown in formula (1) is the same as an anion of the first additive shown in formula (2).

7. The electrolytic solution according to any one of claims 1 to 6, wherein the electrolytic solution further comprises a second electrolyte salt, and the second electrolyte salt comprises one or more of the following: 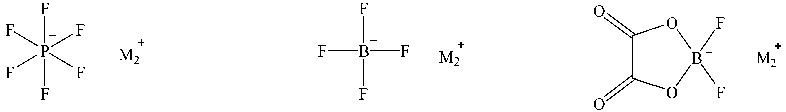 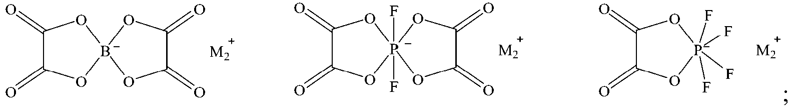
M₂ comprises one or more of Li, Na, or K, and optionally comprises one or more of Li or Na; and
optionally, the content by weight of the second electrolyte salt in the electrolytic solution is denoted as m, which is calculated based on the total weight of the electrolytic solution, and m/(x+m) is greater than or equal to 15%.

8. The electrolytic solution according to any one of claims 1 to 7, wherein the electrolytic solution further comprises a second additive shown in formula (3): 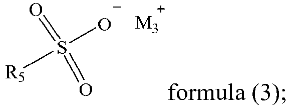
R₅ comprises a fluorine atom and C1-C6 fluoroalkyl, and M₃ comprises one or more of Li, Na, or K, and optionally comprises one or more of Li or Na; and
optionally, the content by weight of the second additive in the electrolytic solution is denoted as n, which is calculated based on the total weight of the electrolytic solution, and 0.01%≤n≤1%.

9. The electrolytic solution according to claim 8, wherein
the second additive comprises one or more of the following: 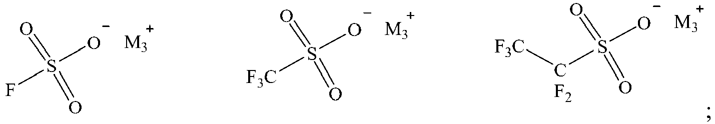 and
optionally, the second additive comprises one or more of D1 to D6:

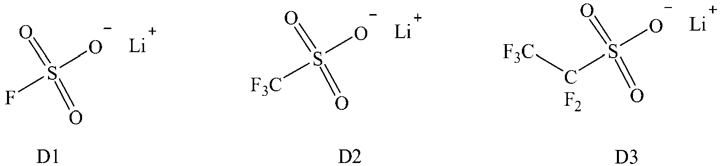

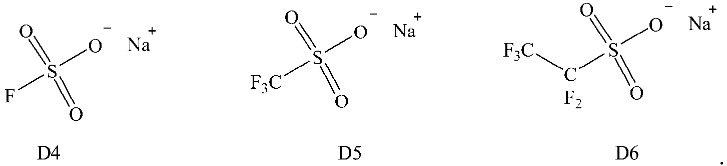

10. The electrolytic solution according to any one of claims 1 to 9, wherein the electrolytic solution further comprises a third additive shown in formula (4): 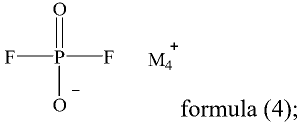
M₄ comprises one or more of Li, Na, or K, and optionally comprises one or more of Li or Na; and
optionally, the content by weight of the third additive in the electrolytic solution is denoted as p, which is calculated based on the total weight of the electrolytic solution, and 0.01%≤p≤1%.

11. The electrolytic solution according to any one of claims 1 to 10, wherein the electrolytic solution further comprises a non-aqueous solvent, and the non-aqueous solvent comprises one or more of cyclic carbonate, linear carbonate, or carboxylic ester;
optionally, the content by weight of the cyclic carbonate in the non-aqueous solvent is denoted as a, which is calculated based on the total weight of the non-aqueous solvent, and 1%≤a≤35%; and/or
optionally, the content by weight of the linear carbonate in the non-aqueous solvent is denoted as b, which is calculated based on the total weight of the non-aqueous solvent, and 65%≤b≤99%; and/or
optionally, the content by weight of the carboxylic ester in the non-aqueous solvent is denoted as c, which is calculated based on the total weight of the non-aqueous solvent, and 0≤c≤30%.

12. A battery cell, comprising a positive electrode sheet, a negative electrode sheet, and the electrolytic solution according to any one of claims 1 to 11.

13. The battery cell according to claim 12, wherein
the positive electrode sheet comprises a positive electrode current collector and a positive electrode film layer disposed on at least one surface of the positive electrode current collector, the positive electrode film layer comprises a first positive electrode active material, and a voltage plateau of the first positive electrode active material is greater than or equal to 3.6 V;
optionally, the first positive electrode active material comprises one or more of lithium cobalt oxide, a lithium nickel cobalt manganese ternary material, a lithium nickel cobalt aluminum ternary material, and respective modified compounds thereof; and/or
optionally, the content by weight of the first positive electrode active material in the positive electrode film layer is greater than or equal to 50%, which is calculated based on the total weight of the positive electrode film layer; and
optionally, the positive electrode current collector comprises an aluminum foil, an aluminum alloy foil, an aluminum mesh, an aluminum alloy mesh, or a composite current collector with a surface containing aluminum or an aluminum alloy.

14. The battery cell according to claim 12 or 13, wherein the negative electrode sheet comprises one or more of natural graphite, synthetic graphite, soft carbon, hard carbon, a silicon-based material, a tin-based material, or lithium titanate.

15. A preparation method for a battery cell, comprising the following steps:
providing a cell container comprising a positive electrode sheet and a negative electrode sheet; and
injecting the electrolytic solution according to any one of claims 1 to 11 into the cell container, to obtain a battery cell.

16. A battery, comprising the battery cell according to any one of claims 12 to 14 or a battery cell prepared in the preparation method according to claim 15.

17. An electrical device, comprising the battery according to claim 16.
